# EUROPÄISCHE PATENTSCHRIFT

(11) **EP 0 666 697 B1**
(45) Veröffentlichungstag und Bekanntmachung des Hinweises auf die Patenterteilung: **25.09.2002**
(21) Anmeldenummer: 95200215.2
(22) Anmeldetag: 30.01.1995
(51) Int. Cl.: H04Q 3/54

(54) **Kommunikationssystem mit einem verteilten Datenbanksystem**
Communications system with a distributed database system
Système de communication avec un système de base de données distribuées

(30) Priorität: 05.02.1994 DE 4403614
(43) Veröffentlichungstag der Anmeldung: 09.08.1995
(73) Patentinhaber: Philips Corporate Intellectual Property GmbH, 52064 Aachen (DE); Koninklijke Philips Electronics N.V., 5621 BA Eindhoven (NL)
(72) Erfinder: Elixmann, Martin, Dr., c/o Philips, D-20097 Hamburg (DE); Klabunde, Karin, c/o Philips, D-20097 Hamburg (DE); Gallersdörfer, Rainer, c/o Philips, D-20097 Hamburg (DE); Nellessen, Karl Ralf, c/o Philips, D-20097 Hamburg (DE)
(74) Vertreter: Volmer, Georg, Dipl.-Ing.

(56) Entgegenhaltungen:
- EP-A- 0 366 341
- US-A- 5 155 837
- US-A- 5 212 789

## Beschreibung

Die Erfindung bezieht sich auf ein Kommunikationssystem mit mehreren, untereinander koppelbaren, wenigstens einer Vermittlungsstelle zugeordneten Vermittlungs-Steuervorrichtungen zur Ausführung von Diensten, mit einem Datenbanksystem und mit einer Management-Steuervorrichtung wenigstens zur Verwaltung der Dienste.

Aus dem Themenheft der Zeitschrift net - Zeitschrift für angewandte Telekommunikation, net special 12, März 1993, Seiten 11 bis 15, ist ein Kommunikationssystem (Intelligentes Netz) bekannt, das über Vermittlungsstellen (service switching point = Dienstevermittlungskomponente) des öffentlichen Nachrichtennetzes und Vermittlungs-Steuervorrichtungen (service control point) mit einer Managment-Steuervorrichtung (service management system) gekoppelt ist. Bestimmte im öffentlichen Nachrichtennetz enthaltene Vermittlungsstellen dienen einerseits dazu Vermittlungsfunktionen mit verschiedenen Endgeräten (z.B. Fernsprechverkehr) oder weiteren Vermittlungsstellen und andererseits eine Vermittlung mit einem zur Bearbeitung von Diensten vorgesehenen Netz (Overlay-Netz) durchzuführen. Die Vermittlungs-Steuervorrichtungen dienen im wesentlichen zur Ausführung eines Dienstes durch Abarbeitung eines Dienstlogikprogrammes. Die Management-Steuervorrichtung ist z.B. zur Verwaltung der Dienste (Neuinstallation oder Veränderung eines Dienstes (Dienstlogikprogramm)), zur Erstellung von Statistiken usw. zuständig.

Aus dem Dokument EP366341 ist ein kommunikationssystem bekannt, das mehrere Vermittlungsstellen enthält, in den Partitionen von einem Datenbank gespeichert sind.

Ein Dienst der Deutschen Bundespost Telekom ist beispielsweise der private Informationsdienst Tele-Info-Service. Wird von einem Teilnehmer eine spezielle Dienstnummer (z.B. 0190...) gewählt, so erkennt dies eine Vermittlungsstelle und stellt eine entsprechende Verbindung mit diesem zur Bearbeitung von Diensten vorgesehenen Netz her. Die dieser Vermittlungsstelle zugeordnete Vermittlungs-Steuervorrichtung führt den Dienst aus, indem das entsprechende Dienstlogikprogramm geladen und abgearbeitet wird. Hierbei werden in der Regel auch Zugriffe auf Datenbestände eines Datenbanksystems durchgeführt. Aus der oben genannten Zeitschrift ist ein Datenbanksystem mit einer zentralen Datenbank bekannt. Bei einer solchen zentralen Datenbank kann ein Engpaß auftreten, wenn viele Dienstlogikprogramme gleichzeitig auf die zentrale Datenbank zugreifen wollen. Hierbei können Verzögerungen oder ein Abbruch des Dienstes auftreten, weil die Daten zum Zugriffszeitpunkt nicht verfügbar sind.

Der Erfindung liegt daher die Aufgabe zugrunde, ein Kommunikationssystem zu schaffen, bei dem die Verfügbarkeit der Daten des Datenbanksystems weitgehend gewährleistet ist.

Die Aufgabe wird durch ein Kommunikationssystem der eingangs genannten Art dadurch gelöst,
daß wenigstens einige Datenbanken zur Speicherung von Kopien von logisch zusammenhängenden Partitionen des Gesamtdatenbestandes vorgesehen sind,
daß bei einer Datenbankoperation die Management- oder eine Vermittlungs- oder eine Datenbank-Steuervorrichtung anhand einer Tabelle zur Lokalisierung einer die Kopie einer Partition verwaltenden Datenbank-Steuervorrichtung vorgesehen ist und
daß die lokalisierte Datenbank-Steuervorrichtung zur Durchführung der Datenbankoperation vorgesehen ist.

Bei dem erfindungsgemäßen Kommunikationssystem ist das Datenbanksystem mit verteilten Datenbanken und jeweils zugehöriger Datenbank-Steuervorrichtung realisiert. Der Gesamtdatenbestand ist in logisch zusammengehörige Teilbereiche (Partitionen) aufgeteilt. Es können von einer Partition mehrere Kopien vorhanden sein, die auf verschiedenen örtlich getrennten Datenbanken abgelegt sind. Nicht jede Datenbank muß bei diesem Datenbanksystem eine Kopie enthalten, kann also leer sein und als Reserve für später hinzuzufügende Daten dienen.

Auf welcher Datenbank sich eine Kopie einer Partition befindet wird einer Tabelle entnommen. Die Lokalisierung der Kopie kann von der Management-, einer Vermittlungsoder einer Datenbank-Steuervorrichtung vorgenommen werden. Die Mangement-Steuervorrichtung kann beispielsweise dann die Tabelle lesen, wenn bestimmte Änderungen in einem Dienstlogikprogramm durchzuführen sind. Eine Vermittlungs-Steuervorrichtung kann die Tabelle lesen, wenn von einer zugehörigen Vermittlungsstelle ein Dienstaufruf erfolgt. Die Management- und Vermittlungs-Steuervorrichtung können jedoch den Auslesevorgang aus der Tabelle auch an die Datenbank-Steuervorrichtung der zugehörigen Datenbank weiterleiten.

Bei einer Datenbankoperation werden zuerst die Einträge in der Tabelle von der Management-, einer Vermittlungs- oder einer Datenbank-Steuervorrichtung gelesen. Nach Lokalisierung einer Kopie einer gesuchten Partition wird die lokalisierte Datenbank-Steuervorrichtung entweder einen Auslese- oder einen Einschreibvorgang (Datenbankoperation) in der in der zugeordneten Datenbank abgelegten Kopie durchführen.

Durch die Verteilung der Datenbanken wird die Verfügbarkeit der Daten des Datenbanksystems erhöht, da die Dienstlogikprogramme nicht gleichzeitig auf eine Datenbank zugreifen müssen.

Die Verfügbarkeit der Daten wird weiter erhöht, wenn wenigstens zur Primärkopie einer Partition eine Sekundärkopie dieser Partition vorhanden ist. Eine Datenbank, die eine Primär- oder eine Sekundärkopie einer Partition enthält, kann keine weitere Kopie dieser Partition speichern. Einschreibvorgänge können unabhängig voneinander und parallel bei allen Kopien einer Partition durchgeführt werden.

Das Datenbanksystem kann eine zentrale Tabelle enthalten, in der die Verteilung der Primär- und Sekundärkopien aufgeführt ist. Wenn viele Zugriffe auf die Tabelle stattfinden, kann ein Engpaß und somit eine Verzögerung von von dem Zugriff auf die Tabelle abhängigen Datenbankoperationen stattfinden. Zur Vermeidung eines solchen Engpasses und zur Geschwindigkeitserhöhung von Datenbankoperationen, enthält nach einer Fortbildung der Erfindung jede Datenbank eine Tabelle über den Speicherort der Primär- und Sekundärkopien. Der Zugriff auf die Tabelle wird dann auch jewils von der zugeordneten Datenbank-Steuervorrichtung durchgeführt. Die Datenbank-Steuervorrichtung ist weiter anhand der in der zugeordneten Datenbank abgelegten Tabelle zur Lokalisierung einer Primär- oder Sekundärkopie und zur Durchführung einer Datenbankoperation vorgesehen. Wenn die Datenbank-Steuervorrichtung eine Kopie in der zugeordneten Datenbank lokalisiert hat, wird anschließend sofort die Datenbankoperation durchgeführt. Im anderen Fall wird der Datenbank-Steuervorrichtung, die der Datenbank mit der gesuchten Kopie zugeordnet ist, ein Befehl zur Ausführung der Datenbankoperation zugeführt. Aufgrund dieser jeweils getrennten Verwaltung der Datenbanken durch die zugeordnete Datenbank-Steuervorrichtung ist es möglich das Datenbanksystem mit weiteren Datenbanken und zugeordneten Datenbank-Steuervorrichtungen im Bedarfsfall zu ergänzen (Modulsystem).

Wenn Einschreibvorgänge in die Primär- und alle weiteren Sekundärkopien einer Partition unabhängig voneinander und parallel erfolgen, ist ein Lesevorgang während dieser Einschreibvorgänge zumindest auf die zu verändernden Daten dieser Partition nicht möglich. Um Auslesevorgänge weiter zu ermöglichen und den Kommunikationsaufwand im Datenbanksystem gering zu halten und damit den Durchsatz des gesamten Systems zu erhöhen, ist das Kommunikationssystem folgendermaßen weitergebildet: Bei einem durchzuführenden Einschreibvorgang ist eine Datenbank-Steuervorrichtung zur Lokalisierung der für die Verwaltung einer Primärkopie einer bestimmten Partition zuständigen Datenbank-Steuervorrichtung vorgesehen. Die lokalisierte Datenbank-Steuervorrichtung dient nach Durchführung des Einschreibvorgangs in der Primärkopie der bestimmten Partition zur Ausgabe einer Anweisung für die Durchführung eines Einschreibvorgangs in allen Sekundärkopien der bestimmten Partition.

Es werden bei dieser Weiterbildung also zuerst Änderungen in einer Primärkopie einer Partition und anschließend Änderungen in der oder den Sekundärkopien unabhängig voneinander und parallel durchgeführt. Ein solches asynchrones Ändern von Kopien einer Partition ist insbesondere in dem erfindungsgemäßen Kommunikationssystem ohne große Probleme durchführbar, da bei der Ausführung von Diensten in der Regel Auslesevorgänge durchgeführt werden. Einschreibvorgänge sind dann erforderlich, wenn ein neuer Dienst installiert oder Dienstparameter verändert werden.

Die Einschreibvorgänge treten gegenüber den Auslesevorgängen sehr viel seltener auf. In vielen Anwendungsfällen ist die aktuelle Version der Daten nicht erforderlich. Somit können die Einschreibvorgänge auf die Sekundärkopien asynchron erfolgen.

Bei einem Auslesevorgang kann auf eine Sekundärkopie oder eine Primärkopie zugegriffen werden. Bei einem durchzuführenden Auslesevorgang lokalisiert eine Datenbank-Steuervorrichtung die für die Verwaltung einer Primärkopie oder einer Sekundärkopie einer bestimmten Partition zuständige Datenbank-Steuervorrichtung, die zur Durchführung des Auslesevorgangs in der Primärkopie oder einer Sekundärkopie der bestimmten Partition dient.

Eine Folge von Auslese- und Einschreibzugriffen einer Datenbank wird als Transaktion bezeichnet. Da eine Datenbank-Steuervorrichtung die Auslese- und Schreibvorgänge der zugeordneten Datenbank steuert, findet also eine lokale Transaktionskontrolle statt. Um die lokale Transaktionskontrolle flexibler zu gestalten, gibt eine Datenbank-Steuervorrichtung bei einem Auslese- oder einem Einschreibvorgang die Daten zum Einschreiben oder Auslesen frei, auf die nicht bei einem parallel stattfindenden Einschreib- oder Auslesevorgang zugegriffen wird. Das bedeutet, daß Daten einer Partition, die während eines Einschreibvorgangs geändert werden, nicht gelesen werden können (Einschreibsperre). Nicht zu verändernde Daten der Partition können gelesen werden. Ebenso kann kein Einschreibvorgang für die Daten stattfinden, die gelesen werden (Auslesesperre).

Ein Ausführungsbeispiel der Erfindung wird nachstehend anhand der Figuren erläutert. Es zeigen:
- Fig. 1: ein Teil eines schematisch dargestellten Kommunikationssystems,
- Fig. 2: ein Beispiel für die Verteilung von Primär- und Sekundärkopien von Partitionen in Datenbanken, die in dem Kommunikationssystem nach Fig. 1 enthalten sind und
- Fig. 3: drei Datenbanken mit Daten von Primär- und Sekundärkopien.

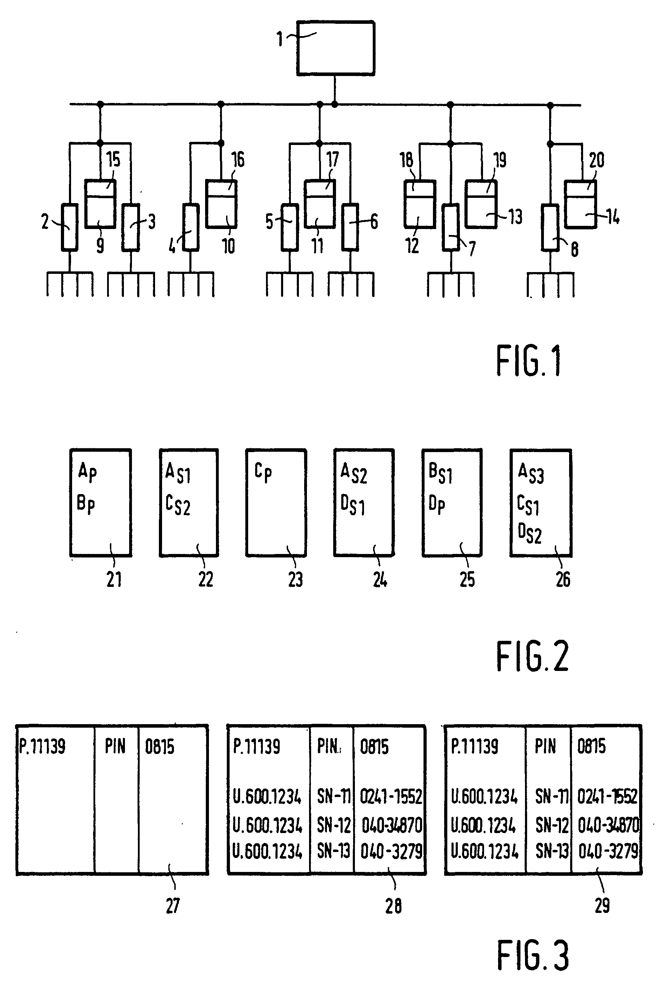

In Fig. 1 ist schematisch ein Teil eines Kommunikationssystems mit einer Management-Steuervorrichtung 1, mehreren Vermittlungs-Steuervorrichtungen 2 bis 8 und mehreren Datenbanken 9 bis 14 und zugeordneten Datenbank-Steuervorrichtungen 15 bis 20 dargestellt. Die Managment-Steuervorrichtung 1, die Vermittlungs-Steuervorrichtungen 2 bis 8 und die Datenbank-Steuervorrichtungen 15 bis 20 sind beispielsweise jeweils als Rechner (Computer) realisiert. Mit jeder Vermittlungs-Steuervorrichtung 2 bis 8 sind nicht näher dargestellte Vermittlungsstellen gekoppelt. Die Vermittlungsstellen sind mit weiteren anderen Vermittlungsstellen und gegebenenfalls mit Endgeräten gekoppelt.

Von einem Endgerät aus wird durch Wahl von bestimmten Anfangsziffern einer Rufnummer eine Verbindung von einer Vermittlungsstelle zu einer Vermittlungs-Steuervorrichtung 2 bis 8 geschaltet. Nach Empfang von weiteren Ziffern der Rufnummer entnimmt eine Vermittlungs-Steuervorrichtung 2 bis 8 aus einer Datenbank 9 bis 14 über eine Datenbank-Steuervorrichtung 15 bis 20 ein Dienstlogikprogramm, das anschließend abgearbeitet wird.

Ein Beispiel für einen Dienst ist ein "Virtuelles Privates Netz". Hierbei kann von bestimmten Endgeräten aus ein Gespräch mit bestimmten Teilnehmern mittels einer Kurzwahl aufgebaut werden.

Die Vermittlungs-Steuervorrichtungen 2 bis 8 sind also im wesentlichen zur Ausführung von Diensten durch Abarbeitung eines Dienstlogikprogrammes vorgesehen. Die Management-Steuervorrichtung 1 verwaltet die Dienste. Sie führt z.B. Neuinstallationen oder eine Veränderung eines Dienstes (Dienstlogikprogramm) durch.

Die Datenbanken 9 bis 14 und die Datenbanken-Steuervorrichtungen 15 bis 20 sind Bestandteile eines Datenbanksystemes. Der Gesamtdatenbestand ist in logisch zusammenhängende Partitionen aufgeteilt und auf die Datenbanken 9 bis 14 verteilt. Von einer Partition gibt es eine Primärkopie und gegebenenfalls eine oder mehrere Sekundärkopien. Ein Beispiel für die Verteilung von Primär- und Sekundärkopien der Partitionen des Gesamtdatenbestandes ist in Fig. 2 gezeigt. Dieses in Fig. 2 dargestellte Beispiel enthält sechs Datenbanken 21 bis 26. Der Gesamtdatenbestand ist in vier Partitionen A, B, C und D eingeteilt. In der Datenbank 21 sind Primärkopien (A_{P}, B_{P}) von den Partition A und B abgespeichert. Eine erste Sekundärkopie A_{S1} von der Partition A und eine zweite Sekundärkopie C_{S2} von der Partition C ist in der Datenbank 22 abgelegt. Die Datenbank 23 enthält nur die Primärkopie C_{P} der Partition C. In der vierten Datenbank 24 ist die zweite Sekundärkopie A_{S2} der Partition A und die erste Sekundärkopie D_{S1} der Partition D abgespeichert. Der Speicherinhalt der Datenbank 25 besteht aus der ersten Sekundärkopie B_{S1} der Partition B und der Primärkopie D_{P} der Partition D. In der letzten Datenbank 26 ist eine dritte Sekundärkopie A_{S3} der Partition A, eine erste Sekundärkopie C_{S1} der Partition C und eine zweite Sekundärkopie D_{S2} der Partition D abgespeichert.

Die Verteilung der Primär- und Sekundärkopien der Partitionen auf die verschiedenen Datenbanken kann beispielsweise von der Managment-Steuervorrichtung 1 festgelegt werden. Die Speicherorte der verschiedenen Primär- und Sekundärkopien sind in einer Tabelle abgelegt, die in jeder Datenbank einmal enthalten ist. Die Verwaltung der Tabelle kann auch die Managment-Steuervorrichtung 1 vornehmen.

Bei einer Veränderung von Daten einer Partition findet ein Einschreibvorgang statt. Um den Durchsatz des Systems zu erhöhen wird dabei zuerst der Einschreibvorgang in der Primärkopie und anschließend hintereinander in allen Sekundärkopien durchgeführt. Ein Auslesevorgang kann entweder mit einer Primär- oder einer Sekundärkopie durchgeführt werden. Bei den Datenbankoperationen (u.a. Einschreibvorgang, Auslesevorgang) werden von einer Vermittlungs-Steuervorrichtung 2 bis 8 oder der Managment-Steuervorrichtung 1 und einer Datenbank-Steuervorrichtung 15 bis 20 Steuervorgänge mittels verschiedener Software-Module (Programmteile) durchgeführt. Im folgenden werden die entsprechenden Programmteile aufgeführt und erläutert:

### Lokalisierung einer Datenbank-Steuervorrichtung:

Start;
Eingabe vom Partitionsnamen und Operationstyp;
Ist eine der Managment-Steuervorrichtung oder einer Vermittlungs-Steuervorrichtung zugeordnete Datenbank-Steuervorrichtung verfügbar?
- J:: Übergabe an gefundene Datenbank-Steuervorrichtung;
- N:: Suche nach einer anderen Datenbank-Steuervorrichtung; Übergabe an gefundene Datenbank-Steuervorrichtung;
Ende;

### Lokalisierung einer Primär- oder Sekundärkopie:

Start;
Ermittlung der Datenbank-Steuervorrichtung, welche die gesuchte Primär- oder Sekundärkopie verwaltet, durch Auslesen der in der zugeordneten Datenbank enthaltenen Tabelle;
Ist die gefundene Datenbank-Steuervorrichtung verfügbar?
- N:: Suchvorgang abbrechen oder später wiederholen;
- J:: Übergabe an gefundene Datenbank-Steuervorrichtung oder Durchführung einer Datenbankoperation;
Ende;

### Durchführung einer Datenbankoperation:

Start;
Stammt Nachricht von der Management- oder einer Vermittlungs-Steuervorrichtung?
- J:: Welche Datenbankoperation liegt vor?
a) Übergabe der Änderungen:
   Wirksamwerden der Änderungen;
   Nachricht an alle Datenbank-Steuervorrichtungen, die eine Sekundärkopie der Partition verwalten, zur
   Durchführung eines Einschreibvorgangs;
b) Einschreiben von veränderten Daten in eine Primärkopie:
   Ist eine Auslese- oder Einschreibsperre gesetzt?
      N: Durchführen eines Einschreibvorgangs von Daten der Primärkopie;
      J: Warten bis zum Aufheben der Sperre und dann Durchführen des Einschreibvorgangs;
c) Auslesen von Daten aus einer Primär- oder Sekundärkopie:
   Wird mit Daten der Kopie ein Einschreibvorgang durchgeführt?
      N: Durchführen eines Auslesevorgangs von Daten der Kopie;
      J: Warten bis zum Ende des Einschreibvorgangs und dann Durchführen des Auslesevorgangs;
d) Abbruch: Änderungen werden nicht wirksam;
- N:: Einschreiben von veränderten Daten in eine Sekundärkopie;
Ende;

Wenn die Managment-Steuervorrichtung 1 oder eine Vermittlungs-Steuervorrichtung 2 bis 8 einen Einschreib- oder einen Auslesevorgang in einer Datenbank 9 bis 14 veranlassen, wird zuerst der Partitionsname (z.B. aus dem abzuarbeitenden Dienstlogikprogramm) und der Operationstyp (z.B. Einschreiben, Auslesen) eingegeben. Der Management-Steuervorrichtung 1 und ebenso der Vermittlungs-Steuervorrichtung (z.B. 2) ist eine Datenbank-Steuervorrichtung (z.B. 17 und 15) zugeordnet. Wenn die Datenbank-Steuervorrichtung (z.B. 15) verfügbar ist, werden dieser Datenbank der Partitionsname und der Operationstyp übergeben und dort die weiteren Steuervorgänge durchgeführt. Ist die zugeordnete Datenbank-Steuervorrichtung (z.B. 15) nicht verfügbar, wird eine andere, verfügbare Datenbank-Steuervorrichtung (z.B. 16) gesucht, und dieser gefundenen Datenbank-Steuervorrichtung (z.B. 16) werden die entsprechenden Daten zur weiteren Steuerung übergeben.

Abhängig vom Operationstyp wird eine Datenbank-Steuervorrichtung (z.B. 20) ermittelt, die eine Primär- oder Sekundärkopie der gesuchten Partition verwaltet. Bei einem Einschreibvorgang muß die Primärkopie und bei einem Auslesevorgang die Primär- oder Sekundärkopie in der in der zugeordneten Datenbank (z.B. 14) enthaltenen Tabelle ermittelt werden. Wenn die gesuchte Datenbank-Steuervorrichtung (z.B. 19) nicht verfügbar ist, wird entweder der Suchvorgang abgebrochen oder später wiederholt (abhängig vom Dienstlogikprogramm). Ist die Datenbank-Steuervorrichtung (z.B. 20) verfügbar, wird nach einer Datenübergabe (Partitionsname, Operationstyp) dort eine Datenbankoperation durchgeführt. Wenn die Datenbank-Steuervorrichtung (z.B. 20), welche die Tabelle ausgelesen hat, auch über eine gesuchte Primär- oder Sekundärkopie verfügt, wird hier die Datenbankoperation durchgeführt.

Wenn die Nachricht über die Durchführung einer Datenbankoperation von der Managment-Steuervorrichtung 1 oder einer Vermittlungs-Steuervorrichtung (z.B. 15) veranlaßt worden ist, wird überprüft, welche Datenbankoperation vorliegt. Wenn nach einem Einschreibvorgang Änderungen übergeben werden sollen, werden diese zuerst wirksam gespeichert und eine Nachricht an jede Datenbank-Steuervorrichtung (z.B. 18), die eine Sekundärkopie verwaltet, gesendet. Mit der Nachricht wird veranlaßt, daß ein Einschreibvorgang in jeder Sekundärkopie durchgeführt werden soll.

Sollen Daten in eine Primärkopie eingeschrieben werden, wird geprüft, ob zur Zeit eine Auslese- oder Schreibsperre gesetzt ist. Eine Auslesesperre ist dann gesetzt, wenn Daten ausgelesen werden. Eine Einschreibsperre ist gesetzt, wenn Daten eingeschrieben werden. Sind die Daten nicht gesperrt, wird ein Einschreibvorgang in der Primärkopie vorgenommen. Im anderen Fall wird der Einschreibvorgang erst dann durchgeführt, wenn die Sperre aufgehoben ist.

Wenn Daten aus einer Primär- oder Sekundärkopie ausgelesen werden sollen, wird zuerst überprüft, ob eine Einschreibsperre gesetzt ist. Bei einer Einschreibsperre werden die zu lesenden Daten gerade verändert (Einschreibvorgang). Ist dies nicht der Fall, wird der Auslesevorgang auf einer Primär- oder einer Sekundärkopie durchgeführt. Sonst wird gewartet bis der Einschreibvorgang beendet ist (Einschreibsperre aufgehoben) und dann der Auslesevorgang vorgenommen.

Wenn die Datenbankoperation "Abbruch" vorliegt, werden die Änderungen nicht wirksam, d.h. es findet keine Speicherung der veränderten Daten statt.

Ist die Nachricht von einer Datenbank-Steuervorrichtung (z.B. 15) gekommen, werden in die Sekundärkopie die neuen Daten eingeschrieben.

Durch Fehler oder Engpässe im Datenbanksystem kann es vorkommen, daß Datenänderungen in einer Sekundärkopie nicht vorgenommen worden sind. Dies kann eine Datenbank-Steuervorrichtung 15 bis 20 durch eine mitgelieferte Zählernummer bei einem Einschreibvorgang feststellen. In diesem Fall können entweder die fehlenden Daten noch angefordert oder alle Daten vollständig neu eingeschrieben werden.

Anhand des Dienstes "Virtuelles Privates Netz", dessen Dienstlogikprogramm unten aufgeführt ist, wird beispielhaft die Verteilung von bestimmten Daten, die bei diesem Dienst benötigt werden, in einem verteilten Datenbanksystem erläutert.

### Virtuelles Privates Netz:

Welche Zeichen sind eingegeben worden?
Zeichen "11":
   Verbindungsaufbau mit der Telefonnummer herstellen, die unter SN-11 abgespeichert ist;
Zeichen "12":
   Verbindungsaufbau mit der Telefonnummer herstellen, die unter SN-12 abgespeichert ist;
Zeichen "13":
   Verbindungsaufbau mit der Telefonnummer herstellen, die unter SN-13 abgespeichert ist;
Zeichen "#":
   Eingabe weiterer Zeichen;
   Verbindungsaufbau mit der eingegebenen Telefonnummer herstellen;
Zeichen "01 600 123":
   Meldung: "Bitte Identifikationsnummer (PIN) eingeben.";
   Ist Identifikationsnummer vorhanden?
      - J:: Meldung: "Bitte für eine Kurzwahl die neue Telefonnummer eingeben."; Änderung einer unter der Kurzwahl abgespeicherten Telefonnummer;
   andere Zeichen:
   Meldung: "Zeichen sind nicht interpretierbar.";

Bei der Abarbeitung des Dienstlogikprogramms "Virtuelles Privates Netz" durch eine Vermittlungs-Steuervorrichtung werden Daten von dem Datenbanksystem benötigt. In Fig. 3 ist ein Beispiel eines Datenbanksystems des erfindungsgemäßen Kommunikationssystems mit drei Datenbanken 27, 28 und 29 schematisch dargestellt. Die Datenbank 27 enthält eine Primärkopie einer ersten Partition. Die erste Partition hat den Partionsnamen "P.1139" und beinhaltet unter der Adresse "PIN" die Identifikationsnummer "0815". Die Primärkopie der ersten Partition ist in der Datenbank 27 und weitere Sekundärkopien sind in den Datenbanken 28 und 29 abgelegt. Eine zweite Partition mit dem Partitionsnamen "U.600.1234" enthält unter den Adressen SN_11, SN_12 und SN_13 die Telefonnummern "0241-1552", "040-34870" und "040-3279". In der Datenbank 28 ist die Primärkopie und in der Datenbank 29 eine Sekundärkopie der zweiten Partition gespeichert.

Eine Vermittlungs-Steuervorrichtung überprüft bei der Ausführung des Dienstlogikprogrammes "Virtuelles Privates Netz", welche Zeichen von einem Endgerät aus eingegeben worden sind. Die vom Endgerät zur Vermittlungsstelle weitergeleiteten Ziffern werden der zugeordneten Vermittlungs-Steuervorichtung übergeben. Wenn die Ziffern "11" eingegeben worden sind, wird versucht, eine Verbindung mit dem Endgerät herzustellen, das die Telefonnummer "0241-1552" aufweist. Diese Telefonnummer ist unter der Adresse SN_11 in der Partition "U.600.1234" der Datenbank 28 oder 29 (Fig. 3) abgespeichert. Der Auslesevorgang kann also in der Datenbank 28 oder 29 durchgeführt werden. Sind die Ziffern "12" oder "13" eingegeben worden, wird versucht, eine Verbindung mit mit dem Engerät herzustellen, das unter der Telefonnummer "040-34870" bzw. "040-3279" erreichbar ist.

Wenn das Zeichen "#" eingegeben worden ist, wird auf die Eingabe einer Telefonnummer gewartet, die nicht unter einer Kurzwahl zu erreichen ist. Nach Eingabe dieser Telefonnummer wird versucht, eine Verbindung mit dem entsprechenden Endgerät aufzubauen.

Wenn die Ziffern "01 600 123" gewählt worden sind, wird eine von der Vermittlungs-Steuervorrichtung erzeugte Meldung an das Endgerät geleitet. Die Meldung fordert einen Teilnehmer zur Eingabe einer Identifikationsnummer auf. Ist die Identifikationsnummer vorhanden, wird nach Aufforderung die unter einer bestimmten Kurzwahl gespeicherte Telefonnummer geändert. Die Identifikationsnummer ist unter dem Partitionsnamen "P.11139" in den Datenbanken 27, 28 und 29 abgelegt. Die Änderung findet dabei zuerst in der Primärkopie statt, die in der Datenbank 28 enthalten ist. Anschließend wird die Sekundärkopie in der Datenbank 29 verändert.

Bei Eingabe anderer Zeichen wird eine Meldung von der Vermittlungs-Steuervorrichtung ausgegeben. Die Meldung gibt an, daß die Zeichen nicht interpretierbar sind.

## Patentansprüche

1. Kommunikationssystem mit mehreren, untereinander koppelbaren, wenigstens einer Vermittlungsstelle zugeordneten Vermittlungs-Steuervorrichtungen (2 bis 8) zur Ausführung von Diensten, mit einem Datenbanksystem (9 bis 20) und mit einer Management-Steuervorrichtung (1) wenigstens zur Verwaltung der Dienste,
wobei das Datenbanksystem verteilte Datenbanken (9 bis 14) mit jeweils einer Datenbank-Steuervorrichtung (15 bis 20) enthält, **dadurch gekennzeichnet**
**daß** wenigstens einige Datenbanken (9 bis 14) zur Speicherung von Kopien von logisch zusammenhängenden Partitionen des Gesamtdatenbestandes vorgesehen sind,
**daß** bei einer Datenbankoperation die Management- oder eine Vermittlungs- oder eine Datenbank-Steuervorrichtung (1; 2 bis 8; 15 bis 20) anhand einer Tabelle zur Lokalisierung einer die Kopie einer Partition verwaltenden Datenbank-Steuervorrichtung (15 bis 20) vorgesehen ist und
**daß** die lokalisierte Datenbank-Steuervorrichtung (15 bis 20) zur Durchführung der Datenbankoperation vorgesehen ist.

2. Kommunikationssystem nach Anspruch 1,
**dadurch gekennzeichnet,**
**daß** eine zur Speicherung einer Primär- oder Sekundärkopie einer Partition bestimmte Datenbank (9 bis 14) nicht zur Speicherung einer weiteren Kopie dieser Partition vorgesehen ist.

3. Kommunikationssystem nach Anspruch 2,
**dadurch gekennzeichnet.**
**daß** in jeder Datenbank (9 bis 14) eine Tabelle über den Speicherort der Primär- und Sekundärkopien enthalten ist, daß eine Datenbank-Steuervorrichtung (15 bis 20) anhand der in der zugeordneten Datenbank (9 bis 14) abgelegten Tabelle zur Lokalisierung eine Primär- oder Sekundärkopie und zur Durchführung einer Datenbankoperation vorgesehen ist.

4. Kommunikationssystem nach Anspruch 3,
**dadurch gekennzeichnet,**
**daß** bei einem durchzuführenden Einschreibvorgang eine Datenbank-Steuervorrichtung (15 bis 20) zur Lokalisierung der für die Verwaltung einer Primärkopie einer bestimmten Partition zuständigen Datenbank-Steuervorrichtung (15 bis 20) vorgesehen ist und
**daß** die lokalisierte Datenbank-Steuervorrichtung (15 bis 20) nach Durchführung des Einschreibvorgangs in der Primärkopie der bestimmten Partition zur Ausgabe einer Anweisung für die Durchführung eines Einschreibvorgangs in allen Sekundärkopien der bestimmten Partition vorgesehen ist.

5. Kommunikationssystem nach Anspruch 4,
**dadurch gekennzeichnet,**
**daß** bei einem durchzuführenden Auslesevorgang eine Datenbank-Steuervorrichtung (15 bis 20) zur Lokalisierung der für die Verwaltung einer Primärkopie oder einer Sekundärkopie einer bestimmten Partition zuständigen Datenbank-Steuervorrichtung (15 bis 20) vorgesehen ist, die zur Durchführung des Auslesevorgangs in der Primärkopie oder einer Sekundärkopie der bestimmten Partition dient.

6. Kommunikationssystem nach Anspruch 5,
**dadurch gekennzeichnet,**
**daß** eine Datenbank-Steuervorrichtung (15 bis 20) bei einem Auslese- oder einem Einschreibvorgang zur Freigabe der Daten vorgesehen ist, auf die nicht bei einem parallel stattfindenden Einschreib- oder Auslesevorgang zugegriffen wird.

## Claims

1. A communications system comprising a plurality of service control points (2 to 8) which service control points can be mutually coupled and are assigned to at least one service switching point for executing services, comprising a database system (9 to 20) and a service management system (1) for managing the services, where the database system comprises distributed databases (9 to 14) each having a database control point (15 to 20), **characterized in that** at least several databases (9 to 14) are provided for storing copies of logically coherent partitions of the total database, **in that** for a database operation the service management system or a service switching point or a database control point (1; 2 to 8; 15 to 20) is available in a Table to localize a database control point (15 to 20) that manages the copy of a partition and **in that** the localized database control point (15 to 20) is provided for carrying out the database operation.

2. A communications system as claimed in Claim 1, **characterized in that** a database (9 to 14) determined to store a primary or secondary copy of a partition is not provided for storing a further copy of this partition.

3. A communications system as claimed in Claim 2, **characterized in that** each database (9 to 14) contains a Table denoting the memory location of the primary and secondary copies, **in that** a database control point (15 to 20) is provided for localizing with the aid of the Table stored in the assigned database (9 to 14) a primary or secondary copy and for carrying out a database operation.

4. A communications system as claimed in Claim 3, **characterized in that** for a writing operation to be carried out, a database control point (15 to 20) is provided for localizing the database control point (15 to 20) responsible for managing a primary copy of a particular partition and **in that** the localized database control point (15 to 20), once the writing operation in the primary copy of that particular partition has been carried out, issues an indication to carry out a writing operation in all the secondary copies of that particular partition.

5. A communications system as claimed in Claim 4, **characterized in that** when a reading operation is to be carried out a database control point (15 to 20) localizes the database control point (15 to 20) responsible for managing a primary copy or a secondary copy of a particular partition, which responsible database control point is used for carrying out the reading operation in the primary copy or a secondary copy of that particular partition.

6. A communications system as claimed in Claim 5, **characterized in that** during a reading or a writing operation a database control point (15 to 20) is provided for releasing data which are not accessed when a writing and a reading operation are carried out simultaneously.

## Revendications

1. Système de communication avec plusieurs dispositifs de commande de commutation (2 à 8) à coupler l'un à l'autre et affectés à au moins un central pour l'exécution de services, avec un système de base de données (9 à 20) et avec un dispositif de commande de gestion (1) au moins pour la gestion des services,
dans lequel le système de bases de données contient des bases de données (9 à 14) distribuées avec respectivement un dispositif de commande de bases de données (15 à 20),
**caractérisé en ce**
**qu'**au moins quelques bases de données (9 à 14) sont prévues pour l'enregistrement de copies de partitions logiquement cohérentes du fichier de données complet,
**qu'**en cas d'opération sur la base de données, le dispositif de commande de gestion ou un dispositif de commande de commutation ou de base de données (1; 2 à 8; 15 à 20) est prévu à l'aide d'un tableau pour la localisation d'un dispositif de commande de bases de données (15 à 20) gérant la copie d'une partition et que le dispositif localisé de commande de bases de données (15 à 20) est prévu pour l'exécution de l'opération de bases de données.

2. Système de communication selon la revendication 1,
**caractérisé en ce**
**qu'**une base de données (9, 14) déterminée pour l'enregistrement d'une copie primaire ou secondaire d'une partition n'est pas prévue pour l'enregistrement d'une copie supplémentaire de cette partition.

3. Système de communication selon la revendication 2,
**caractérisé en ce**
**que** chaque base de données (9 à 14) contient un tableau sur l'emplacement de mémoire des copies primaires et secondaires,
**qu'**un dispositif de commande de bases de données (15 à 20) est prévu à l'aide du tableau enregistré dans la base de données affectée (9 à 14) pour la localisation d'une copie primaire ou secondaire et pour l'exécution d'une opération de base de données.

4. Système de communication selon la revendication 3,
**caractérisé en ce**
**qu'**en cas de procédure d'enregistrement à effectuer, un dispositif de commande de bases de données (15 à 20) est prévu pour la localisation du dispositif de commande de base de données (15 à 20) compétent pour la gestion d'une copie primaire d'une partition déterminée et
**que** le dispositif localisé de commande de base de données (15 à 20) est prévu après l'exécution de la procédure d'enregistrement dans la copie primaire de la partition déterminée pour la sortie d'une instruction pour l'exécution d'une procédure d'enregistrement dans toutes les copies secondaires de la partition déterminée.

5. Système de communication selon la revendication 4,
**caractérisé en ce**
**qu'**en cas de procédure de lecture à effectuer, un dispositif de commande de base de données (15 à 20) est prévu pour la localisation du dispositif de commande de base de données (15 à 20) compétent pour la gestion d'une copie primaire ou d'une copie secondaire d'une partition déterminée, dispositif qui sert à l'exécution de la procédure de lecture dans la copie primaire ou d'une copie secondaire de la partition déterminée.

6. Système de communication selon la revendication 5,
**caractérisé en ce**
**qu'**un dispositif de commande de base de données (15 à 20) est prévu en cas de procédure de lecture ou d'enregistrement pour la libération de données auquel on n'a pas accès en cas de procédure d'enregistrement ou de lecture parallèle.
